# EUROPÄISCHE PATENTSCHRIFT

(11) **EP 1 306 625 B1**
(45) Veröffentlichungstag und Bekanntmachung des Hinweises auf die Patenterteilung: **07.09.2005**
(21) Anmeldenummer: 02020096.0
(22) Anmeldetag: 07.09.2002
(51) Int. Cl.: F24F 11/00

(54) **Vorrichtung zur Regulierung der Luftfeuchtigkeit**
Apparatus for regulating the humidity
Appareil pour régler l'humidité

(30) Priorität: 24.10.2001 DE 20117215 U
(43) Veröffentlichungstag der Anmeldung: 02.05.2003
(73) Patentinhaber: Wallenfang, Kurt, 51145 Köln (DE)
(72) Erfinder: Wallenfang, Kurt, 51145 Köln (DE)

(56) Entgegenhaltungen:
- EP-A- 0 707 180
- GB-A- 2 115 922
- GB-A- 2 208 314
- US-A- 5 881 951
- PATENT ABSTRACTS OF JAPAN vol. 011, no. 377 (M-649), 9. Dezember 1987 (1987-12-09) & JP 62 147241 A (SEKISUI CHEM CO LTD), 1. Juli 1987 (1987-07-01)

## Beschreibung

Die Erfindung betrifft eine Vorrichtung zur Regulierung der Luftfeuchtigkeit in einem abgeschlossenen, mobilen Schlafraum mit einer Lufteintrittsöffnung gemäß dem Oberbegriff des Patentanspruchs 1.

Insbesondere in Schlafräumen von Wohnwagen und Wohnmobilen, aber auch in Schlafräumen von Booten bevorzugen viele Personen zur Nachtzeit keine oder nur eine schwache künstliche Beheizung. Diese häufig als Wohnraum und als Schlafraum verwendeten Räume verfügen zwar oft über einen Lüfter. Dieser Lüfter hat meist aber einen lauten Antrieb und wird deswegen selten während der Schlafenszeit eingesetzt. Während der Nachtzeit erfolgt daher meist keine Zwangsbelüftung eines Wohnwagens durch Ventilatoren o.ä. Insbesondere durch die Atmung der in dessen Innenraum liegenden Personen wird in der Nacht eine große Menge Feuchtigkeit (bis zu 1 Liter pro Person) abgegeben. Hierdurch beschlagen die Scheiben und die Innenwände des Raumes. Durch die sich sammelnde Feuchtigkeit kann es auch zu Korrosionsschäden an metallischen Teilen des Wohnwagens oder zu Schimmelbefall kommen.

Die Druckschrift GB-A-2 208 314 zeigt eine Vorrichtung gemäß dem Oberbegriff des Patentanspruchs 1. Hier wird mit einfachen Steuermitteln eine wirksame Reduzierung der Luftfeuchtigkeit erreicht. Allerdings hat das vorgeschlagene System seine Grenzen, wenn der Lüfter seine maximale Leistung erreicht und die Luftfeuchtigkeit dennoch über dem gewünschten Wert liegt.

Der Erfindung liegt die Aufgabe zugrunde, mit geringem Aufwand und geringen Kosten eine Vorrichtung zur Regulierung der Luftfeuchtigkeit in einem geschlossenen Raum (z.B. Wohnwagen) zu schaffen, deren Effektivität gegenüber den bekannten Vorrichtungen gesteigert ist.

Diese Aufgabe wird erfindungsgemäß durch die Merkmale des kennzeichnenden Teils des Patentanspruchs 1 in Verbindung mit den Merkmalen seines Oberbegriffs gelöst.

Mit sehr einfachen Steuerungsmitteln wird somit eine äußerst effektive Einheit zur Reduzierung der Luftfeuchtigkeit in einem Schlafraum während der Nachtstunden geschaffen. Da die Luftfeuchtigkeit kontinuierlich gemessen wird, ist es einerseits nicht notwendig, den Lüfter die ganze Nacht laufen zu lassen. Andererseits kann beim Überschreiten eines eingestellten Grenzwertes ohne Verzögerung die Belüftung aktiviert und so die feuchte Luft abgesogen werden. Leise laufende Lüfter, die beispielsweise zur Kühlung von Netzgeräten elektrischer Geräte und Computer verwendet werden, sind nahezu unhörbar und weisen eine für die meisten Anwendungsfälle ausreichende Leistung auf. Da derartige Lüfter in großen Stückzahlen für Computer und andere elektrische Geräte hergestellt werden, sind sie sehr günstig. Auch die Regelelektronik kann sehr einfach ausgestaltet werden, so daß die gesamte Vorrichtung sehr preiswert herzustellen ist. Insbesondere bei mehreren in einem Raum schlafenden Personen besteht die Gefahr, daß die Leistungsgrenze des Lüfters erreicht wird, obwohl die Feuchtigkeit zu hoch ist. Wenn der Feuchtigkeitsausstoß durch die in einem Raum schlafenden Personen größer ist als die Feuchtigkeitsabsenkung durch den Lüfter bei der maximalen Drehzahl, kann die Steuerung eine Heizung zur Erwärmung der Luft innerhalb des Raumes aktivieren, bis der gemessene Wert der Luftfeuchtigkeit den Sollwert erreicht. Der Begriff "Aktivieren" umfaßt dabei sowohl das Zuschalten einer Heizung bei unbeheizten Räumen als auch das Hochschalten einer auf eine niedrige Heizstufe geschalteten Heizung. Durch das Zu- oder Hochschalten der Heizung wird die Lufttemperatur innerhalb des Raumes gesteigert. Da warme Luft zur Aufnahme einer größeren absoluten Feuchtigkeitsmenge in der Lage ist, wird durch das Beheizen die relative Luftfeuchtigkeit der Raumluft abgesenkt. Zudem wird die zugeführte Frischluft auf eine höhere Temperatur erwärmt, so daß auch deren relative Luftfeuchtigkeit weiter abgesenkt wird.

Die Steuerung der Drehzahl des Lüfters erfolgt durch einen Operationsverstärker, an dessen Eingangsklemmen zum einen ein den gemessenen Ist-Wert und zum anderen ein den Sollwert repräsentierendes Signal anliegt. Neben den Operationsverstärkern sind nur sehr wenige passive Bauelemente wie Widerstände, Dioden und Kondensatoren erforderlich, um die Steuerung zu realisieren. Es kann somit eine zuverlässige und äußerst kostengünstige Steuerung zur Realisierung des erfindungsgemäßen Verfahrens mit einfachen elektronischen Bauteilen geschaffen werden. Die Steuerung kann auf jeden sinnvollen Feuchtigkeits-Sollwert eingestellt werden, bei dessen Überschreitung der Lüfter eingeschaltet wird. Um bei einer Luftfeuchtigkeit nahe diesem Grenzwert eine instabile Steuerung, das heißt eine in sehr kurzen Intervallen ein- und ausschaltende Steuerung, zu vermeiden, sollte eine gewisse Hysterese vorgesehen werden. Dabei ist der Steuerung-Einschaltwert, d.h. der Feuchtewert zum Einschalten des Lüfters, höher als der Ausschaltwert, d.h. der Feuchtewert zum Ausschalten des Lüfters. Aufgrund dieser Hysterese können auch Lüfter, die nur zum Betrieb bei einer festen Drehzahl ausgelegt sind, vorteilhaft zum Ausstoßen der feuchten Luft aus dem Inneren des Raums genutzt werden.

Die anfallende Feuchtigkeit ist in der Regel besonders groß, wenn die Temperatur außerhalb des Raumes relativ niedrig, insbesondere niedriger als 10°C ist. Die mit der Körpertemperatur von 37 °C ausgeatmete Atemluft kühlt sich auf die niedrigere Raumtemperatur ab, wobei ihre relative Luftfeuchtigkeit steigt, bis sie den Sättigungswert von 100% erreicht. Bei einem weiteren Abkühlen kondensiert Feuchtigkeit aus der Luft aus.

Durch das Ausblasen der feuchten Innenluft aus dem Raum wird in diesem Raum ein Unterdruck gegenüber der Umgebung erzeugt, so daß durch eine Lufteintrittsöffnung des Raumes Frischluft aus der Umgebung in den Raum eingesogen wird. Diese weist meist eine deutlich niedrigere Luftfeuchtigkeit als 100% auf. Außerdem wird die in den Raum eingetretene Frischluft meist gegenüber der Außentemperatur erwärmt. Beim Erwärmen sinkt die relative Luftfeuchtigkeit der Frischluft, so daß die gesamte Luftfeuchtigkeit in dem Raum durch das Gebläse gesenkt wird.

Vorzugsweise ist die Drehzahl des Lüfters kontinuierlich oder in Stufen veränderbar. Die Drehzahl des Lüfters sollte automatisch mit dem gemessenen Wert der relativen Luftfeuchtigkeit innerhalb des Raumes steigen, so daß bei hoher Feuchtigkeit eine starke Ventilation erfolgt. Bei geringer Feuchtigkeit wird durch eine niedrige Lüfterdrehzahl eine störende Geräuschentwicklung vermieden.

Wenn der Wert der Luftfeuchtigkeit möglichst genau auf einem festgelegten Wert gehalten werden soll, können beliebige Regelglieder (Proportional-, Integral- oder Differentialregler) eingesetzt werden, die neben dem Feuchtigkeitswert auch die zeitabhängige Zu- oder Abnahme des Feuchtigkeitswertes berücksichtigen. Hierzu kann die Steuerung mit einem elektronischen Zeitmeßgerät ausgerüstet sein. Um aber einen möglichst einfachen Aufbau der Anlage zu erzielen, kann ein einfacher Proportionalregler für die Steuerung der Lüfterdrehzahl verwendet werden.

Zusätzlich kann die Steuerung ein Signal (z.B. Warnleuchte oder Warnton) abgeben, wenn bei maximaler Drehzahl des Lüfters der Feuchtigkeitswert zu hoch ist. Die Insassen des Wohnwagens werden durch das Warnsignal informiert, daß manuell die Heizung eingeschaltet werden muß, um den Feuchte-Sollwert zu erreichen.

Der Lüfter sollte im Bereich des höchsten Punktes des Raumes angeordnet sein. In diesem höchsten Punkt ist die Raumluft am wärmsten und kann somit am meisten Feuchtigkeit aufnehmen, bevor sie ausgeblasen wird. Der Lüfter ist vorzugsweise in eine vertikale Wand des Raumes eingelassen und transportiert die Raumluft durch diese Wand hindurch nach außen. Alternativ kann der Lüfter in einem in der Decke des Raumes angeordneten Austrittsrohr angeordnet sein, welches mit einer Abdeckhaube gegen Wassereintritt abgedeckt ist. Bei derartigen pilzförmigen Deckenlüftungen besteht allerdings die Gefahr, daß kalte Luft nach unten durch das Rohr dringt. Daher sollte eine Rückschlagklappe vorgesehen werden, die das Rohr verschließt, wenn der Lüfter nicht läuft.

Vorzugsweise ist der Feuchte-Sensor am Lüfter angeordnet. Hierdurch wird der Wert der maximalen Feuchtigkeit erfaßt, so daß die Steuerung eine Überschreitung des Sollwertes am Ort maximaler Feuchtigkeit vermeidet.

Die Lufteintrittsöffnung ist im unteren Bereich der Raumes angeordnet, um eine Luftzirkulation zu erzeugen. Die Frischluft durchläuft die gesamte Höhe des Raums, wobei sie sich meist erwärmt und Feuchtigkeit aufnimmt, bevor sie durch den oben angeordneten Lüfter ausgestoßen wird. Vorzugsweise ist der Raum außer an der Lufteintrittsöffnung gegen die Umgebung abgedichtet. Hierdurch wird ein parasitäres Einströmen von Frischluft durch Spalte vermieden und die beschriebene optimale Luftzirkulation erzielt.

Nach dem gleichen Prinzip kann mit einem Rauchsensor oder einem Sensor für andere Luftverunreinigungen deren Konzentration im Raum geregelt werden. In Abhängigkeit von der gemessenen Konzentration von z.B. Rauch oder Schwebstoffen in der Raumluft wird die Lüftung aktiviert. Die Rauchregelung ist insbesondere dann sinnvoll, wenn rauchende Personen sich z.B. beim Kartenspiel in dem Raum aufhalten. Selbstverständlich kann diese Rauchregelung auch vorteilhaft mit der genannten Feuchteregulierung in einem Gerät kombiniert werden. Bis auf den Sensor sind die erforderlichen Bauteile weitgehend identisch. So kann an eine Steuerungselektronik für einen Lüfter sowohl der Rauchsensor als auch der Feuchte-Sensor angeschlossen werden. Eine Gaskonzentrationsmessung und -regelung ist insbesondere im Hinblick auf die häufig in Wohnwagen verwendeten Butan-/Propangas-Heizungen und -herde sinnvoll. Ferner kann eine CO-Konzentrationsmessung durchgeführt werden, die eine unerwünscht hohe und gesundheitsgefährdende CO-Konzentration im Falle unvollständiger Verbrennung durch Heiz- oder Kochgeräte überwacht. Je nachdem, ob die gemessene Luftverunreinigung schwerer oder leichter ist als Luft, muß der Sensor unten oder oben in dem überwachten Raum angebracht werden.

Bei größeren Räumen, z.B. in großen Wohnwagen wie Zirkuswagen oder auf großen Booten, können natürlich mehrere der erfindungsgemäßen Geräte in verschiedenen Raumbereichen angebracht werden. Dabei können an den Geräten bei Bedarf verschiedene Sollwerte eingestellt werden. Diese Geräte können an eine gemeinsame Steuerzentrale angeschlossen werden, die erstens eine zentrale Einstellung der Sollwerte ermöglicht, zweitens mit anderen Zentralgeräten, beispielsweise mit einer Zentralheizung gekoppelt werden kann und drittens die gegenseitige Beeinflussung der Steuerbefehle der verschiedenen Geräte berücksichtigt.

Neben der Steuerung der Drehzahl des Lüfters erfolgt vorzugsweise auch die Steuerung des Betriebs der Heizung und der Aktivierung des Signalgebers jeweils durch einen Operationsverstärker.

Vorzugsweise erfolgt das Einschalten des Lüfters und der Heizung mit einer Hysterese, d.h. der Schwellenwert für den Ist-Wert beim Einschalten liegt höher als der Schwellenwert für den Ist-Wert beim Ausschalten. Dadurch werden Instabilitäten des Systems in Form von An- und Ausschalten in schneller Folge vermieden.

Die Erfindung wird nachfolgend anhand eines Ausführungsbeispiels unter Bezugnahme auf die beigefügten Zeichnungen beschrieben. Die Zeichnungen zeigen in:
- Fig. 1: eine schematische Darstellung einer erfindungsgemäßen Vorrichtung zur Regulierung der Luftfeuchtigkeit als Blockdiagramm und
- Fig. 2: eine schematische Innenansicht eines Wohnwagens mit der erfindungsgemäßen Vorrichtung.
- Fig. 3: eine schematische Darstellung der Steuerungsschaltung für die erfindungsgemäße Vorrichtung.

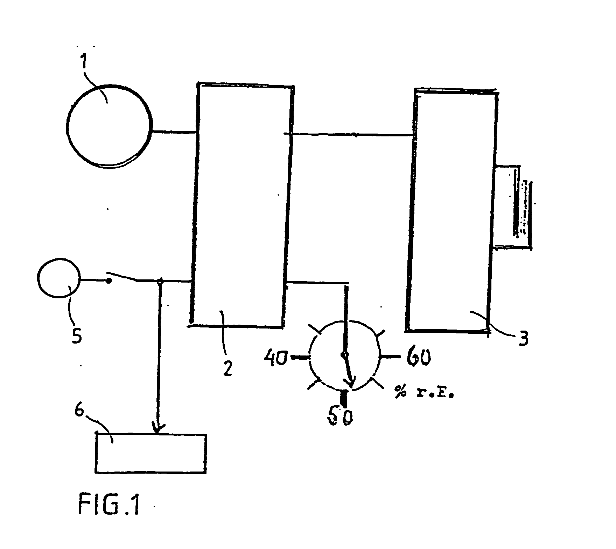

In der Fig. 1 sind die Bestandteile der erfindungsgemäßen Vorrichtung zur Regulierung der Luftfeuchtigkeit dargestellt. Ein Feuchte-Sensor 3 oder Hygrometer mißt die Luftfeuchtigkeit in einem abgeschlossenen Raum z.B. eines Wohnwagens. Eine Steuerung 2 ist mit dem Feuchte-Sensor 3 über ein Signalkabel verbunden. An der Steuerung 2 kann der Benutzer einen Sollwert für die Luftfeuchtigkeit einstellen, der nicht überschritten werden soll. In Fig. 1 ist beispielsweise als Sollwert für die relative Luftfeuchtigkeit etwa 51% gewählt worden. Feuchte-Sensoren werden heute schon in sehr geringen Baugrößen mit einer Höhe, Breite und Länge von weniger als 1 cm sowie einem sehr geringen Preis angeboten.

Ist der gemessene Ist-Wert größer als der Sollwert, aktiviert die Steuerung 2 einen Lüfter 1, der die feuchte Raumluft in die Umgebung ausbläst. Hierbei kann ein äußerst sparsamer und leise laufender Lüfter 1 eingesetzt werden. Wie bereits erwähnt, eignen sich Lüfter für Netzgeräte von Computern und anderen Elektrogeräten mit einer Leistung von ca. 1-2 Watt sehr gut für diesen Einsatzzweck. Ferner ist es vorteilhaft, wenn die Öffnung mit dem Lüfter 1 insbesondere bei Verwendung in einem Lüftungsrohr, welches die Decke durchdringt, durch eine Rückschlagklappe verschlossen ist, um den Rückstrom kalter Luft zu vermeiden.

Während der Lüfter 1 die feuchte Luft in die Umgebung ausbläst, strömt gleichzeitig durch eine Lufteintrittsöffnung, vorzugsweise im unteren Bereich des Raumes, Frischluft nach.

Die Lüfterdrehzahl sollte in Abhängigkeit von der Luftfeuchtigkeit einstellbar sein. Je größer die Differenz zwischen Ist-Wert und Sollwert ist, desto größer ist die von der Steuerung 2 eingestellte Drehzahl. Hierdurch wird bei geringen Feuchtigkeitswerten ein hoher Energieverbrauch und eine hohe Lärmentwicklung vermieden.

Falls die zur Erreichung des Feuchte-Sollwertes erforderliche Drehzahl größer ist als die maximale Lüfterdrehzahl, schaltet die Steuerung 2 eine Heizung 6 zu, welche die Luft in dem Raum erwärmt. Die Erwärmung der Luft führt zu einem Absinken der relativen Luftfeuchtigkeit.

Weiterhin kann die erfindungsgemäße Vorrichtung einen Signalgeber 5, beispielsweise eine Warnleuchte oder einen Lautsprecher, aufweisen, der mit der Steuerung 2 verbunden ist. Wird die maximale Drehzahl des Lüfters 1 erreicht, ohne daß die Feuchtigkeit in dem gewünschten Maße absinkt, aktiviert die Steuerung 2 den Signalgeber 5. Eine Person in dem Raum, die das Warnsignal wahrnimmt, kann manuell die Heizung zuschalten.

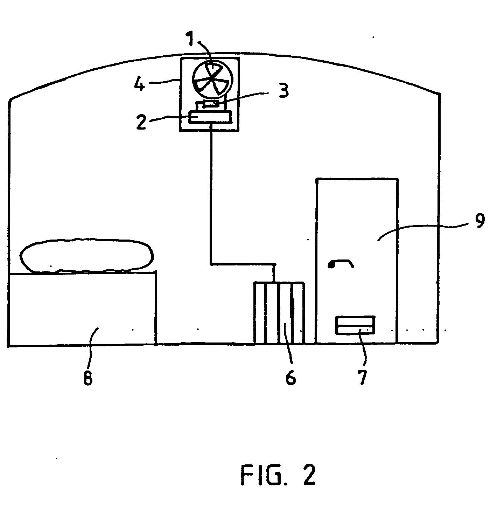

Die Fig. 2 zeigt die Anordnung des beschriebenen Systems innerhalb eines Wohnwagens mit einem Bett 8. Dabei sind Lüfter 1, Feuchte-Sensor 3, Steuerung 2, die in einem gemeinsamen Gehäuse 4 untergebracht sind, aus Gründen der Übersichtlichkeit vergrößert dargestellt. In einer praktischen Ausführungsform beträgt der Durchmesser des Lüfters 1 etwa 10 cm und die Länge und Breite des Gehäuses 4 liegen jeweils unter 15 cm. Sowohl der Lüfter 1 als auch der Feuchte-Sensor 3 sind im höchsten Bereich des Wohnwagens angeordnet. Die Lufteintrittssöffnung 7 ist unten, z.B. in einer Tür 9 des Wohnwagens, angeordnet. Hierdurch wird eine optimale Spülung des gesamten Innenraums des Wohnwagens mit Frischluft sichergestellt. Auch die Heizung 6 ist unten angeordnet, da die kalte und spezifisch schwere Luft im unteren Bereich des Wohnwagens ist und durch die Temperatur der Außenfläche der Heizung 6 besonders effektiv erhitzt werden kann.

Die Steuerung 2 kann an einer beliebigen Position innerhalb des Wohnwagens angeordnet werden, ist aber vorzugsweise in einem Gehäuse 4 zusammen mit dem Lüfter 1 und dem Feuchte-Sensor 3 angeordnet.

Die Vorrichtung für die Rauchregelung hat prinzipiell den gleichen Aufbau wie die zuvor beschriebenen Ausführungsformen, wobei lediglich der Feuchte-Sensor 3 durch einen Rauchsensor zu ersetzen ist. Auch kann ein Rauchsensor (nicht dargestellt) parallel zu dem Feuchte-Sensor 3 an der Steuerung 2 angeschlossen werden, wobei die Vorrichtung dann sowohl zur Regelung der Feuchtigkeit als auch zur Regelung der Rauchkonzentration geeignet ist.

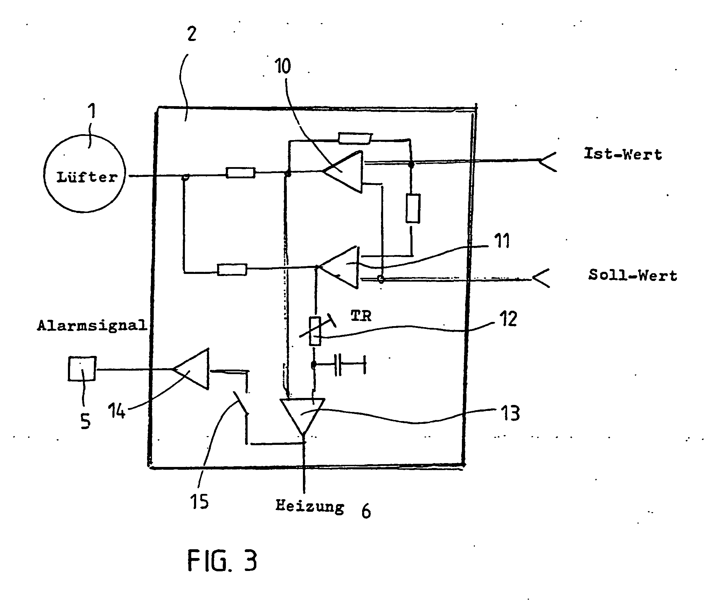

Die Fig. 3 zeigt eine einfache Steuerungsschaltung, mit der die erfindungsgemäße Vorrichtung realisiert werden kann. Von dem Sensor wird ein Signal, üblicherweise ein Spannungssignal, zugeführt, das den Ist-Wert repräsentiert. Ein Sollwert, der durch den Benutzer einstellbar ist, wird der Steuerschaltung ebenfalls zugeführt. Ein erster Operationsverstärker 10 steuert das Einschalten des Lüfters 1 auf eine niedrige Drehzahl. An die Eingangsklemmen dieses Operationsverstärkers 10 sind Spannungen angeschlossen, die zum einen den von dem Sensor bestimmten Ist-Wert 16 und zum anderen einen von dem Benutzer eingegebenen Sollwert wiedergeben. Ein zweiter mit Ist-Wert über einen Widerstand und mit Sollwert beaufschlagter Operationsverstärker 11 schaltet den Lüfter auf eine höhere Drehzahl, wenn die Differenz zwischen den beiden Werten einen bestimmten Betrag übersteigt. Über einen einstellbaren Widerstand 12, auch Trimmwiderstand genannt, wird ein dritter Operationsverstärker 13 mit Ist-Wert und Sollwert beaufschlagt. Dieser dritte Operationsverstärker 13 steuert die Zuschaltung der Heizung 6. Ein vierter Operationsverstärker 14 kann über einen Schalter 15 zugeschaltet werden. Dieser Operationsverstärker 14 aktiviert einen Signalgeber für das manuelle Einschalten einer Heizung, wenn die automatische Zuschaltung nicht möglich ist.

Auf diese Weise läßt sich mit äußerst einfachen und kostengünstigen Standardbauteilen eine elektronische Schaltung zur Steuerung der erfindungsgemäßen Vorrichtung herstellen.

Wie erwähnt, ist bei der Steuerschaltung eine Hysterese verwirklicht, das heißt, die Operationsverstärker 10,11,13 deaktivieren die gesteuerten Elemente 1,5,6 bei einem Ist-Wert, der niedriger als der Ist-Wert ist, bei dem die gesteuerten Elemente 1,5,6 aktiviert werden.

### Bezugszeichenliste:

- 1: Lüfter
- 2: Steuerung
- 3: Feuchte-Sensor
- 4: Gehäuse
- 5: Signalgeber
- 6: Heizung
- 7: Lufteintrittsöffnung
- 9: Tür
- 10: Operationsverstärker
- 11: Operationsverstärker
- 12: einstellbarer Widerstand
- 13: Operationsverstärker
- 14: Operationsverstärker
- 15: Schalter

## Patentansprüche

1. Vorrichtung zur Regulierung der Luftfeuchtigkeit in einem abgeschlossenen, mobilen Wohn- und/oder Schlafraum mit einer Lufteintrittsöffnung (7), mit mindestens einen Lüfter (1), einen Feuchte-Sensor (3), der die relative Luftfeuchtigkeit innerhalb des Raumes mißt, und eine Steuerung (2), die die Drehzahl des Lüfters (1) in Abhängigkeit von der gemessenen Luftfeuchtigkeit steuert, wobei die Steuerung der Drehzahl des Lüfters (1) durch mindestens einen Operationsverstärker (10,11) erfolgt, an dessen Eingangsklemmen zum einen ein den gemessenen Ist-Wert und zum anderen ein den Sollwert repräsentierendes Signal anliegt,
**dadurch gekennzeichnet, daß** nach dem Erreichen der maximalen Drehzahl des Lüfters (1) die Steuerung (2) eine Heizung (6) zur Erwärmung der Luft innerhalb des Raumes aktiviert, wenn der gemessene Wert der Luftfeuchtigkeit kein Absinken der Luftfeuchtigkeit auf oder unter den Sollwert erkennen läßt.

2. Vorrichtung nach Anspruch 1, **dadurch gekennzeichnet, daß** das Einschalten der Heizung durch einen dritten Operationsverstärker (13) erfolgt.

3. Vorrichtung nach Anspruch 2, **dadurch gekennzeichnet, daß** der Ist-Wert über einen verstellbaren Widerstand (12) zur Eingangsklemme des dritten Operationsverstärkers (13) geleitet wird.

4. Vorrichtung nach Anspruch 3, **dadurch gekennzeichnet, daß** bei einem Absinken der Luftfeuchtigkeit auf oder unter den Sollwert die Heizung (6) deaktiviert wird.

5. Vorrichtung nach Anspruch 4, **dadurch gekennzeichnet, daß** bei einem Absinken der Luftfeuchtigkeit auf oder unter den Sollwert die Drehzahl des Lüfters (1) reduziert oder der Lüfter (1) ausgeschaltet wird.

6. Vorrichtung nach einem der vorangehenden Ansprüche, **dadurch gekennzeichnet, daß** die Drehzahl des Lüfters (1) mit dem Wert der gemessenen Luftfeuchtigkeit steigt.

7. Vorrichtung nach Anspruch 6, **dadurch gekennzeichnet, daß** das Einschalten des Lüfters auf eine niedrige Drehzahl bei geringem Überschreiten des Sollwerts durch den Ist-Wert durch einen ersten Operationsverstärker (10) erfolgt und daß das Umschalten des Lüfters auf eine höhere Drehzahl bei starkem Überschreiten des Sollwerts durch den Ist-Wert durch einen zweiten Operationsverstärker (11) erfolgt.

8. Vorrichtung nach Anspruch 7, **dadurch gekennzeichnet, daß** der Ist-Wert über einen ohmschen Widerstand zur Eingangsklemme des zweiten Operationsverstärkers (11) geleitet wird.

9. Vorrichtung nach einem der vorangehenden Ansprüche, **dadurch gekennzeichnet, daß** nach dem Erreichen der maximalen Drehzahl des Lüfters (1) die Steuerung (2) einen Signalgeber (5) aktiviert, wenn der gemessene Wert der Luftfeuchtigkeit kein Absinken der Luftfeuchtigkeit auf oder unter den Sollwert erkennen läßt.

10. Vorrichtung nach Anspruch 9, **dadurch gekennzeichnet, daß** das Aktivieren des Signalgebers (5) durch einen vierten Operationsverstärker (11) erfolgt.

11. Vorrichtung nach einem der vorangehenden Ansprüche, **dadurch gekennzeichnet, daß** die Operationsverstärker die gesteuerten Elemente (1,5,6) bei einem Ist-Wert deaktivieren, der niedriger als der Ist-Wert ist, bei dem die gesteuerten Elemente (1,5,6) aktiviert werden.

12. Vorrichtung nach einem der vorangehenden Ansprüche, **dadurch gekennzeichnet, daß** der Lüfter (1) etwa auf Höhe des höchsten Punktes des Raumes angeordnet ist.

13. Vorrichtung nach einem der vorangehenden Ansprüche, **dadurch gekennzeichnet, daß** der Feuchte-Sensor (3) nahe dem Lüfter (1) angeordnet ist.

14. Vorrichtung nach einem der vorangehenden Ansprüche, **dadurch gekennzeichnet, daß** der Lüfter (1) in eine vertikale Wand des Raumes eingelassen ist und die Raumluft durch diese Wand hindurch nach außen transportiert.

15. Vorrichtung nach einem der vorangehenden Ansprüche, **dadurch gekennzeichnet, daß** die Lufteintrittsöffnung (7) im unteren Bereich des Raumes angeordnet ist.

16. Vorrichtung nach einem der vorangehenden Ansprüche, **dadurch gekennzeichnet, daß** der Raum gegen die Umgebung abgedichtet ist und ein Lufteintritt ausschließlich durch die Lufteintrittsöffnung (7) erfolgt.

17. Vorrichtung nach einem der vorangehenden Ansprüche, **gekennzeichnet durch** mindestens einen Rauchsensor (3), der einen die Konzentration von Rauch und/oder Gasen und/oder Schwebstoffen in der Luft repräsentierenden Meßwert abgibt, und eine Steuerung (2), die die Drehzahl des Lüfters (1) in Abhängigkeit von der gemessenen Konzentration steuert.

## Claims

1. An arrangement for regulating the humidity in a closed mobile living and/or sleeping room comprising an air inlet opening (7), at least one fan (1), a humidity sensor (3) measuring the relative humidity within the room, and a control unit controlling the speed of the fan (1) in dependence on the humidity measured, wherein the speed of the fan (1) is controlled by at least one operational amplifier (10, 11), at the input terminal of which there is applied the measured actual value on the one hand and a signal representing the desired value on the other hand,
**characterized in that**, upon reaching the maximum speed of the fan (1), control unit (2) activates a heating (6) for warming up the air within the room when the measured humidity value does not show a decrease of the humidity to or below the desired value.

2. An arrangement according to claim 1, **characterized in that** the heating is switched on by a third operational amplifier (13).

3. An arrangement according to claim 2, **characterized in that** the actual value is transmitted via an adjustable resistor (12) to the input terminal of the third operational amplifier (13).

4. An arrangement according to claim 3, **characterized in that** the heating (6) is deactivated when the humidity decreases to or below the desired value.

5. An arrangement according to claim 4, **characterized in that** the speed of the fan (1) is reduced or said fan (1) is switched off when the humidity decreases to or below the desired value.

6. An arrangement according to any of the above claims, **characterized in that** the speed of the fan (1) increases with the measured humidity value.

7. An arrangement according to claim 6, **characterized in that**, if the actual value slightly exceeds the desired value, the fan is switched on at a low speed by means of a first operational amplifier (10) and that, in case the actual value grossly exceeds the desired value, the fan is switched to a higher speed by means of a second operational amplifier (11).

8. An arrangement according to claim 7, **characterized in that** the actual value is transmitted via an ohmic resistor to the input terminal of the second operational amplifier (11).

9. An arrangement according to any of the above claims, **characterized in that**, upon reaching the maximum speed of the fan (1), control unit (2) activates a signal transmitter (5) if the measured humidity value does not show a decrease of the humidity to or below the desired value.

10. An arrangement according to claim 9, **characterized in that** the signal transmitter (5) is activated by means of a fourth operational amplifier (11).

11. An arrangement according to any of the above claims, **characterized in that** the operational amplifiers deactivate the controlled elements (1, 5, 6) at an actual value that is lower than the actual value at which the controlled elements (1, 5, 6) are activated.

12. An arrangement according to any of the above claims, **characterized in that** the fan (1) is arranged at about the level of the highest point of the room.

13. An arrangement according to any of the above claims, **characterized in that** the humidity sensor (3) is arranged dose to the fan (1).

14. An arrangement according to any of the above claims, **characterized in that** the fan (1) is embedded into a vertical wall of the room and that the room air is transported through said wall to the outside.

15. An arrangement according to any of the above claims, **characterized in that** the air inlet opening (7) is arranged in the lower area of the room.

16. An arrangement according to any of the above claims, **characterized in that** the room is sealed off from the environment and air enters exclusively through the air inlet opening (7).

17. An arrangement according to any of the above claims, **characterized by** at least one smoke sensor (3) that issues a measuring value representing the concentration of smoke and/or gases and/or suspended matter in the air and a control unit (2) that controls the speed of the fan (1) in dependence on the concentration measured.

## Revendications

1. Dispositif de régulation de l'humidité de l'air dans une pièce de séjour ou à coucher fermée mobile avec une orifice d'admission d'air (7), avec au moins un ventilateur (1), un capteur d'humidité (3) qui mesure l'humidité relative de l'air à l'intérieur de la pièce, et une commande (2) qui régule le tours-minute du ventilateur (1) dépendamment de l'humidité de l'air mesurée, tandis que la commande du tours-minute du ventilateur (1) s'effectue grâce au minimum à un amplificateur opérationnel (10, 11), auquel est attenant un signal représentant pour l'une une valeur effective mesurée et pour l'autre un point de consigne aux connexions d'entrée,
**caractérisé en ce que**, la commande (2) active un chauffage (6) en vue du réchauffement de l'air contenu dans la pièce, après obtention du tours-minute maximal du ventilateur (1) lorsque, la valeur mesurée de l'humidité de l'air ne laisse apparaître aucune baisse de l'humidité de l'air en dessus ou au dessous du point théorique.

2. Dispositif, selon la spécification 1, **caractérisé en ce que,** la mise en route du chauffage s'effectue par un troisième amplificateur opérationnel (13).

3. Dispositif, selon la spécification 2, **caractérisé en ce que,** la valeur effective est conduite par une résistance réglable (12) aux connexions d'entrée du troisième amplificateur opérationnel (13).

4. Dispositif, selon la spécification 3, **caractérisé en ce que,** le chauffage (6) est désactivé lors d'une baisse de l'humidité de l'air apparaissant en dessus ou au dessous du point théorique.

5. Dispositif, selon la spécification 4, **caractérisé en ce que**, le tours-minute du ventilateur (1) est réduit ou le ventilateur (1) lui-même est arrêté lors d'une baisse de l'humidité de l'air apparaissant en dessus ou au dessous du point théorique.

6. Dispositif, selon une des spécifications précédentes, **caractérisé en ce que**, le tours-minute du ventilateur (1) augmente avec la valeur de l'humidité de l'air mesurée.

7. Dispositif, selon la spécification 6, **caractérisé en ce que**, la mise en route du ventilateur s'effectue sur un tours-minute moindre par un faible dépassement du point théorique par la valeur effective par un premier amplificateur opérationnel (10) et que, la commutation du ventilateur se produit à un tours-minute élevé lors d'un dépassement excessif du point de consigne par la valeur effective par un deuxième amplificateur opérationnel (11).

8. Dispositif, selon la spécification 7, **caractérisé en ce que**, la valeur effective est conduite par une résistance ohmique à la borne de connexion d'entrée du deuxième amplificateur opérationnel (11).

9. Dispositif, selon une des spécifications précédentes, **caractérisé en ce que,** la commande (2) d'un poste transmetteur des signaux (5) est activée, après obtention du tours-minute maximal du ventilateur (1) lorsque, la valeur mesurée de l'humidité de l'air ne laisse apparaître aucune baisse de l'humidité de l'air en dessus ou au dessous du point théorique.

10. Dispositif, selon la spécification 9, **caractérisé en ce que,** la mise en activité du poste transmetteur des signaux (5) s'effectue par un quatrième amplificateur opérationnel (11).

11. Dispositif, selon une des spécifications précédentes, **caractérisé en ce que,** les amplificateurs opérationnels désactivent les éléments commandés (1, 5, 6) lors d'une valeur effective, qui est moindre que la valeur effective, par laquelle les éléments commandés (1, 5, 6) sont activés.

12. Dispositif, selon une des spécifications précédentes, **caractérisé en ce que**, le ventilateur (1) est disposé à peu près à la hauteur du point culminant de la pièce.

13. Dispositif, selon une des spécifications précédentes, **caractérisé en ce que**, le capteur d'humidité (3) est disposé près du ventilateur (1).

14. Dispositif, selon une des spécifications précédentes, **caractérisé en ce que**, le ventilateur (1) est encastré dans un mur à la verticale et l'air des locaux est transporté à travers ce mur jusqu'à l'extérieur.

15. Dispositif, selon une des spécifications précédentes, **caractérisé en ce que**, l'orifice d'admission d'air (7) est disposé dans une partie inférieure de la pièce.

16. Dispositif, selon une des spécifications précédentes, **caractérisé en ce que**, la pièce est rendue étanche contre le milieu et qu'une admission d'air s'effectue exclusivement par l'orifice d'admission d'air (7).

17. Dispositif, selon une des spécifications précédentes, **caractérisé en ce que**, un capteur d'humidité (3) au moins, donne une valeur mesurée représentant la concentration de fumée et/ou de gaz et/ou de matières suspendues en l'air, et une commande (2), qui régule le tours-minute du ventilateur (1) dépendamment de la concentration mesurée.
